# EUROPÄISCHE PATENTSCHRIFT

(11) **EP 2 748 568 B1**
(45) Veröffentlichungstag und Bekanntmachung des Hinweises auf die Patenterteilung: **11.07.2018**
(21) Anmeldenummer: 12758766.5
(22) Anmeldetag: 23.08.2012
(51) Int. Cl.: G01G 11/08, G01G 13/24, B65G 47/52

(54) **SELBSTKALIBRIERENDE DOSIERVORRICHTUNG**
SELF-CALIBRATING DOSING DEVICE
DISPOSITIF DOSEUR À AUTO-ÉTALONNAGE

(30) Priorität: 24.08.2011 DE 102011110960
(43) Veröffentlichungstag der Anmeldung: 02.07.2014
(73) Patentinhaber: Schenck Process Europe GmbH, 64293 Darmstadt (DE)
(72) Erfinder: MIKULEC, Michal, 273 61 Velka Dobra (CZ); WEINAND, Robert, 63329 Egelsbach (DE)
(86) Internationale Anmeldenummer: PCT/EP2012/003570
(87) Internationale Veröffentlichungsnummer: WO 2013/026574

(56) Entgegenhaltungen:
- WO-A1-2005/105288
- DE-A1-102007 055 566

## Beschreibung

Die vorliegende Erfindung betrifft eine Dosiervorrichtung für Schüttgut mit einer an einem Auslassöffnung eines Schüttgutbehälters befestigten Dosierwaage. Die Erfindung betrifft ferner ein Verfahren zum Betreiben der Dosiervorrichtung.

Eine Dosiervorrichtung mit einer an einem Auslauf eines Behälters befestigten Dosierwaage ist zum Beispiel aus der WO 2009/065524 A1 bekannt. Diese Dosierwaage umfasst im wesentlichen ein sich horizontal erstreckendes Fördermittel, das bevorzugt ein Schneckenförderer sein kann und das über eine Anzahl von Lagereinrichtungen auf einem festen Traggerüst abgestützt ist. Zwischen dem Traggerüst und dem Fördermittel ist eine Anzahl von Messvorrichtungen vorgesehen, die derart angeordnet und ausgebildet sind, das Gewicht des mit dem Fördermittel geförderten Schüttgutes kontinuierlich zu erfassen. Das Fördermittel ist motorisch angetrieben und dazu ausgebildet, das jeweilige Schüttgut in vorgegebener Richtung von einem Aufnahmebereich zu einem Abwurfbereich zu fördern.

Weitere Austragsvorrichtungen zum kontinuierlich geregelten Austrag von schwer-fließenden Schüttgütern aus einem Schüttgutbehälter, bei denen die Fördermittel an ihrem Austrittsbereich auf einer Wägezelle abgestützt sind, sind aus der WO 2005/105288A1 bekannt.

An dem Boden des Behälters ist ein vertikales Füllrohr angebracht, das auf den Aufnahmebereich des Fördermittels geführt ist. Der Behälter bevorratet zumindest einen Teil des zu fördernden Schüttgutes und bildet im Zusammenwirken mit dem Füllrohr einen Zuteiler für das Fördermittel. In dem Behälter kann ein Rührwerk vorgesehen sein, mit dem zum Beispiel schlecht fließende Schüttgüter agitiert werden können, so dass in dem Behälter ein Massenfluss für eine gleichmäßige Beladung des Fördermittels gewährleistet werden kann.

Der Behälter bzw. das an dem Boden angebrachte Füllrohr und das Fördermittel werden bevorzugt mechanisch voneinander entkoppelt, um einen Durchgriff der im Behälter auftretenden Bewegungen auf die Messergebnisse bei der Gewichtserfassung mit dem Fördermittel zu vermeiden. Bei einem Schneckenförderer erfolgt eine Entkopplung beispielsweise mit einer flexiblen Manschette, mit der das Füllrohr des Behälters und ein Rohrstutzen am Aufnahmebereich des Fördermittels verbunden sind.

Damit bei der kontinuierlichen Messung ausschließlich das Gewicht eines jeweiligen Fördermittels erfasst wird, schlägt die WO 2009/065524 A1 eine vollständig schwimmende Lagerung des Fördermittels vor. Dazu wird das Fördermittel unterseitig über eine Anzahl Pendellager auf dem Traggerüst abgestützt, wobei wenigstens ein Pendellager einen integrierten Kraftmessaufnehmer besitzt. Die Pendellager sind jeweils an beiden Enden des sich im Wesentlichen horizontal erstreckenden Fördermittels angeordnet.

Im Förderbetrieb wird das vertikal fließende Schüttgut durch das Fördermittel in eine horizontale Richtung umgelenkt und aus dem Aufnahmebereich des Fördermittels abgezogen. Verbesserungswürdig an dem Stand der Technik ist, dass insbesondere bei schwer fließenden Schüttgütern extrem schwankende vertikale Kräfte durch das vertikal nachfließende Schüttgut verursacht werden können. Diese Kräfte können durch das Schüttgut auf das Fördermittel und damit auf die Pendellager übertragen werden, die am Aufnahmebereich unter dem Fördermittel angeordnet sind. Diese Kräfte können zu einer Verfälschung der Messwerte bei der Gewichtserfassung führen.

Der vorliegenden Erfindung liegt daher die Aufgabe zugrunde, die durch die vertikalen Kräfte insbesondere bei schwer fließendem Schüttgut verursachten Messfehler zu eliminieren und die Messgenauigkeit einer Dosiervorrichtung mit einem an einem Behälter angeordneten, im Wesentlichen horizontal ausgerichteten Fördermittel zu erhöhen.

Die Lösung der Aufgabe ist durch eine Vorrichtung und ein Verfahren nach einem der unabhängigen Ansprüche gegeben. Bevorzugte und/oder vorteilhafte Weiterbildungen sind Gegenstand der abhängigen Ansprüche.

Dementsprechend wird die Aufgabe mit einer Dosiervorrichtung für Schüttgut gelöst, die ein an einer Auslassöffnung eines Schüttgutbehälters angeordnetes, sich im Wesentlichen horizontal erstreckendes und motorisch angetriebenes Fördermittel umfasst. Das Fördermittel ist ausgebildet, das Schüttgut von einem Eintrittsbereich zu einem Austrittsbereich zu fördern. Der Eintrittsbereich ist unter dem Schüttgutbehälter angeordnet und der Austrittsbereich ist auf wenigstens einer ersten Messvorrichtung abgestützt.

Die erste Messvorrichtung ist derart angeordnet und ausgebildet, die Gewichtsbelastung des Fördermittels durch das Schüttgut zu ermitteln.

Die Messvorrichtung, die beispielsweise als Kraftmessdose oder Wägezelle ausgeführt sein kann, bildet mit dem aufgestützten Fördermittel eine Dosierwaage, mit der ein Massenstrom des in Förderrichtung geförderten Schüttgutes kontinuierlich erfasst werden kann.

An dem Eintrittsbereich ist das Fördermittel frei schwebend an dem Schüttgutbehälter angehängt. Fördermittel und Schüttgutbehälter sind so eingerichtet, dass diese getrennte Bewegungen vollziehen können und somit voneinander entkoppelt sind. Durch die frei schwebende Aufhängung des Fördermittels und folglich auch der Dosierwaage am Schüttgutbehälter wird ein Durchgreifen von extrem schwankenden, d.h. zum Beispiel impulsförmigen oder ruckartigen, vertikalen Kräften auf die Messvorrichtung wirksam unterdrückt. Die Ermittlung der Gewichtsbelastung durch das Schüttgut erfolgt mit der Messvorrichtung, die auf der dem Eintrittsbereich für das Schüttgut gegenüberliegenden Seite angeordnet ist. Die Messvorrichtung liegt somit außerhalb des kritischen Bereichs, im dem die schwankenden vertikalen Kräfte (d.h. die Störkräfte) in die Förderwaage eingekoppelt werden könnten.

Insbesondere zum Fördern schwer fließender Schüttgüter sind Schneckenförderer als Fördermittel bevorzugt geeignet. Ein solcher Schneckenförderer umfasst zumindest ein äußeres Gehäuse, in dessen rohrförmigen Inneren eine Förderschnecke drehbar gelagert angeordnet ist. Die Förderschecke besitzt eine Welle, die extern motorisch angetrieben ist und die von einem Schneckengewinde umgeben ist.

Die frei schwebende Aufhängung kann zum Beispiel auch bei einem Bandförderer, einem Kettenförderer oder einem Plattenbandförderer geeignet sein, um die schwankenden vertikalen Kräfte durch nachrutschendes Schüttgut auf das jeweilige Fördermittel bei der Gewichtserfassung wirksam zu unterdrücken.

Die Dosiervorrichtung kann elektronische Mittel umfassen, die ausgebildet sind, den Massenfluss zu ermitteln, der mit dem Fördermittel gefördert wird. Der Massenfluss ergibt sich in Abhängigkeit der erfassten Gewichtsbelastung des Fördermittels und der Fördergeschwindigkeit, die von der Geschwindigkeit des motorischen Antriebs des Fördermittels abhängig ist.

Die elektronischen Mittel können vorteilhafter Weise einen Regelkreis umfassen, mit dem die die Fördergeschwindigkeit des Fördermittels so zu steuern ist, dass der geförderte Massenstrom konstant bleibt.

Vorzugsweise kann der Schüttgutbehälter auf einer Anzahl von zweiten Messvorrichtungen abgestützt sein, die derart angeordnet und ausgebildet ist/sind, die durch das Schüttgut verursachte Gesamtgewichtsbelastung des Behälters und des Fördermittels zu ermitteln.

Ferner können die elektronischen Mittel ausgebildet sein, über die zweite(n) Messvorrichtung(en) eine zeitliche Abnahme der Gesamtgewichtsbelastung zu erfassen und diese mit der durch das Fördermittel geförderte Schüttgutmasse zu vergleichen, und gegebenenfalls einen Korrekturfaktor zum Ermitteln des geförderte Massenstroms bereitzustellen.

Des Weiteren kann der Schüttgutbehälter ein Rührwerk umfassen, das ausgebildet ist, das Schüttgut zu agitieren. Somit kann insbesondere bei schwer fließenden Schüttgütern in dem Schüttgutbehälter ein Massenfluss eingestellt werden.

In einer Weiteren besonders vorteilhaften Ausführung kann das Fördermittel am Eintrittsbereich über wenigstens eine dritte. Messvorrichtung frei schwebend an dem Schüttgutbehälter angehängt sein. Die Messvorrichtungen sind derart angeordnet und dazu ausgebildet ist, die vertikal wirkenden Kräfte zwischen dem Schüttgutbehälter und dem Fördermittel zu erfassen.

Die dritte(n) Messvorrichtung(en) kann/können mit elektronischen Mitteln in Verbindung stehen, die ausgebildet sind, das Rührwerk in dem Schüttgutbehälter in Abhängigkeit der zwischen dem Schüttgutbehälter und dem Fördermittel erfassten vertikal wirkenden Kräfte so zu steuern, dass sich in dem Schüttgutbehälter ein homogenes Fließverhalten einstellt.

Die Erfindung umfasst ferner ein Verfahren zum Betreiben einer erfindungsgemäßen Dosiervorrichtung für Schüttgut. Das Verfahren umfasst wenigstens die folgenden Schritte:
a) Messen der Gewichtsbelastung des Fördermittels über wenigstens eine erste Messvorrichtung;
b) Ermitteln des Massenstromes des im Fördermittel geförderten Schüttgutes aus der Fördergeschwindigkeit und aus der Gewichtsbelastung des Fördermittels sowie aus einem Korrekturfaktor;
c) Vergleichen des ermittelten Massenstromes mit einem vorgegebenen Sollwert für den Massenstrom;
d) Anpassen der Fördergeschwindigkeit des Fördermittels in Abhängigkeit des Vergleichs zwischen dem ermittelten Massenstrom und dem vorgegebenen Sollwertes des Massenstromes.

Während des Betreibens der Dosiervorrichtung kann das Verfahren eine sich zyklisch wiederholende Kontrollmessung vorsehen, die zusätzlich zumindest folgende Verfahrensschritte umfasst:
i) Messen der Gesamtgewichtsbelastung des Schüttgutbehälters und des Fördermittels über wenigstens eine zweite Messvorrichtung;
ii) Ermitteln der Abnahme der Gesamtgewichtsbelastung während eines definierten Zeitraumes;
iii) Ermitteln der während des definierten Zeitraumes mit dem Fördermittel geförderten Schüttgutmasse;
iv) Ermitteln des Korrekturwertes aus dem Quotienten der ermittelten Abnahme der Gesamtgewichtsbelastung und der ermittelten vom Fördermittel geförderten Schüttgutmasse;
v) Anpassen des Korrekturwertes für den Verfahrensschritt b) .

Des Weiteren umfasst die Erfindung ein Verfahren zum Bereitstellen einer Rührwerksregelung für den Betrieb einer Dosiervorrichtung, das folgende Schritte umfasst:
1) Messen von vertikalen Kräfte über wenigstens eine dritte Messvorrichtung, die zwischen dem Schüttgutbehälter und des Fördermittels wirken;
2) Ermitteln und Analysieren eines zeitlichen Signalverlaufs der gemessenen vertikalen Kräfte,
3) Anpassen einer Rührgeschwindigkeit des Rührwerks im Schüttgutbehälter, in Abhängigkeit des ermittelten und analysierten Signalverlaufs.

Die Erfindung wird nachfolgend anhand einer beispielhaften Ausführungsform unter Bezugnahme der beigefügten Zeichnung detailliert beschrieben.

Die Zeichnung zeigt eine schematische Darstellung einer Dosiervorrichtung mit einem Schüttgutbehälter und an einem an dem Behälter angeordneten Fördermittel in Form eines Schneckenförderers.

Bei der dargestellten Ausführungsform ist der Schüttgutbehälter ein zylindrischer, an einer Trägerstruktur 1 befestigter Schüttgutbehälter 10 und beispielhaft auf einem oberen Längsholm einer trapezförmigen Trägerstruktur 1 (z.B. aus Stahlträgern) befestigt. An dem Behälterboden ist ein kegelförmig nach unten auf eine Auslauföffnung zulaufendes Austragsteil 11 angebracht. Zwischen dem Schüttgutbehälter 10 und der Trägerstruktur 1 ist eine Anzahl von Messvorrichtungen (Lagereinrichtungen) 12 vorgesehen, über die der Schüttgutbehälter 10 gegenüber der Trägerstruktur 1 abgestützt ist.

Innerhalb des Schüttgutbehälters 10 ist ein in der Zeichnung nicht dargestelltes Rührwerk angeordnet, das sich gegebenenfalls in das Austragsteil 11 hinein erstreckt. Mit dem Rührwerk können insbesondere schlecht fließende Schüttgüter agitiert werden.

Durch die Agitation des Schüttgutes mit dem Rührwerk stellt sich in dem Austragsteil 11 ein Massenfluss ein, der über die Auslauföffnung an das Fördermittel 20 abgegeben werden kann. Das Fördermittel 20 ist unterhalb des Austragteils 11 angeordnet, und dazu ausgebildet, das von dem Schüttgutbehälter 10 bevorratete, agitierte und an der Auslassöffnung zugeteilte Schüttgut abzuziehen.

Der Schüttgutbehälter 10 mit dem integrierten Rührwerk kann zusammen mit dem Austragsteil 11 somit als Zuteiler für das Fördermittel 20 angesehen werden.

Das Fördermittel 20 umfasst ein langgestrecktes im Wesentlichen rohrförmiges Gehäuse 21, in dessen Inneren vorzugsweise eine Förderschnecke 22 drehbar gelagert ist. Die Förderschnecke 22 ist über einen Antriebsmotor 23 angetrieben. Am Aufnahmebereich bzw. Eintrittsbereich des Fördermittels 20, d.h. an dem gemäß der Darstellung linken Endbereich des Fördermittels 20, ist ein Eintrittsbereich (Einlassflansch) 24 vorgesehen, der sich durch eine entsprechende Öffnung in das Innere des rohrförmigen Gehäuses 21 erstreckt. An dem gegenüberliegenden Ende besitzt das rohrförmige Gehäuse 21 eine untere Öffnung, die in einen Austrittsbereich (Abwurfrohr) 25 mündet und den Abwurfbereich bzw. Austrittsbereich für das vom Fördermittel 20 geförderte Schüttgut definiert.

Die Auslauföffnung des Zuteilers 10, 11 ist über eine flexible Verbindung mit dem Einlassflansch 24 verbunden. Durch die flexible Verbindung, die zum Beispiel mit einer koaxial um das unter Ende des Austragteils 11 und das obere Ende des Einlassflanschs 24 befestigten flexiblen Manschette erreicht werden kann, werden Zuteiler 10, 11 und Fördermittel 20 mechanisch voneinander entkoppelt. Das Fördermittel 20 und der Zuteiler 10, 11 können voneinander getrennte Bewegungen vollziehen und sind somit, insbesondere auch schwingungstechnisch, voneinander entkoppelt.

Das Fördermittel 20 ist auf Seite des Abwurfbereichs, d.h. gemäß der Darstellung auf der rechten Seite, über wenigstens eine erste Messvorrichtung (Lagereinrichtung) auf der Trägerstruktur (Tragegerüst) 1 abgestützt, die in der Zeichnung mit dem Bezugszeichen 27 gekennzeichnet ist. In der Lagereinrichtung 27 ist eine Kraftmessvorrichtung integriert, mit der die auf die Lagereinrichtung wirkende Gewichtsbelastung erfasst werden kann. Die Kraftmessvorrichtung kann z.B. eine Kraftmessdose bzw. eine Wägezelle umfassen.

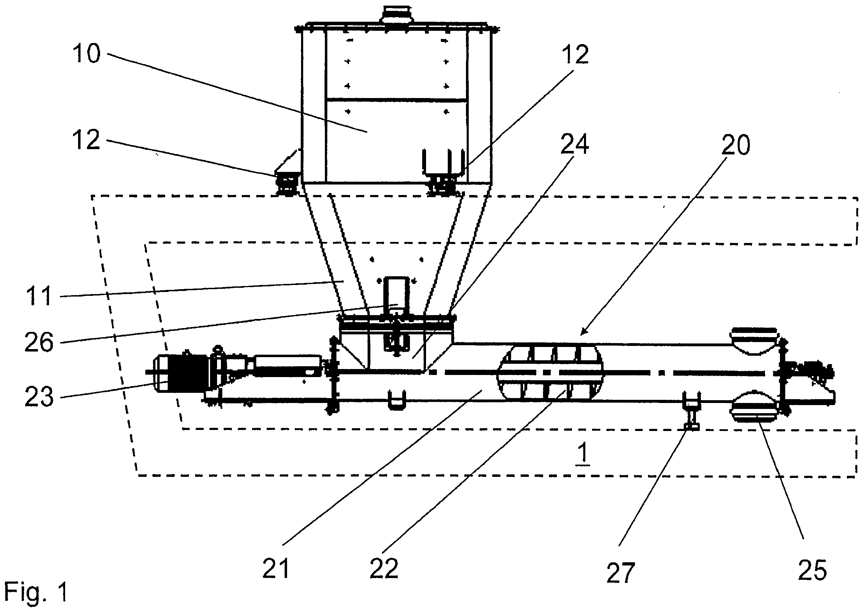

Diese Lagereinrichtung 27 ist in der Nähe des Abwurfrohrs 25 angeordnet und kann sich wie dargestellt links vom Abwurfrohr 25 befinden, aber auch auf der rechten Seite vom Abwurfrohr 25 angeordnet sein. Es können auch zwei Lagereinrichtungen symmetrisch zur Mittellinie des Fördermittels 20 nahe an dem Abwurfrohr 25 angeordnet sein. An dem dem Abwurfrohr 25 gegenüberliegenden Ende, d.h. auf der linken Seite der Darstellung, ist das Fördermittel 20, also gemäß Figur 1, über Gelenke 26 frei schwebend an dem Zuteiler 10, 11 angehängt.

Das Fördermittel 20 bildet mit der schwebende Aufhängung an der Seite des Aufnahmebereichs und der wägetechnischen Lagerung auf der Trägerstruktur 1 an der Abwurfseite eine Dosierwaage, die kontinuierlich eine gravimetrische Erfassung des geförderten Massenstromes ermöglicht.

Während des Förder- bzw. Dosierbetriebs wird das Schüttgut an der Auslauföffnung des Austragsteils 11 von seiner vertikalen Flussrichtung im Aufnahmebereich des Fördermittels 20 in eine horizontale Richtung umgelenkt. Dabei können unterschiedliche vertikale Kräfte auftreten, die zum Beispiel von den Schüttguteigenschaften, der geometrischen Ausgestaltung der Zuteilers 10, 11 bzw. seiner Wendinnenoberfläche abhängen können. Durch die mit dem Rührwerk durchgeführte Agitation des Schüttgutes können diese vertikalen Kräfte enorm schwankend sein, dass heißt insbesondere impulsförmig auftreten. Diese impulsförmig oder ruckartig schwankenden vertikalen Kräfte treten insbesondere bei schwer fließenden Schüttgütern auf und führen bei bekannten Dosierwaagen zur gravimetrischen Bestimmung eines Massenflusses regelmäßig zu verfälschten Gewichtsmessungen, da die Dosierwaagen gemäß dem Stand der Technik auch unter dem Aufnahmebereich über Lageeinrichtungen auf der Trägerstruktur abgestützt werden müssen.

Mit der frei schwebenden Aufhängung des Fördermittels 20 an dem Zuteiler 10, 11, die aufnahmebereichsseitig über die Gelenke 26 erfolgt, kann ein Durchgriff von den agitationsbedingten Störsignalen bei der Gewichtserfassung wirksam unterdrückt werden.

Das in dem Fördermittel 20 befindliche bzw. durch die Förderschnecke 22 geförderte Schüttgut wird gewichtsmäßig kontinuierlich mit der in der Lagereinrichtung 27 integrierten Messvorrichtung erfasst. Durch Multiplikation mit der Fördergeschwindigkeit des Fördermittels 20, die über die Drehzahl des Antriebsmotors 23 vorgegebenen ist, ergibt sich der jeweilig aktuelle Massenstrom des in horizontaler Richtung geförderten Schüttgutes. Der aktuelle Massenstrom wird über die Drehzahl des Antriebsmotors 23 als Stellgröße eines Regelkreises auf einen Sollwert ausgeregelt, um eine konstante Förderung zu gewährleisten.

Die dargestellte Dosiervorrichtung ist des Weiteren mit einer Einrichtung für eine automatische Kalibrierung der Dosierwaage ausgestattet. Die Lagereinrichtung 12, über die der Zuteiler 10, 11 des Fördermittels 20 auf der Trägerstruktur 1 abgestützt ist, ist dazu jeweils mit einer Wägezelle ausgerüstet. Mit diesen Wägezellen der Lagereinrichtungen 12 wird das Gewicht von Zuteiler 10, 11 und dem angehängten Fördermittels 20 erfasst. Während des fortlaufenden Förderbetriebes nimmt die Masse des im Schüttgutbehälter bevorratete Schüttgut kontinuierlich ab. Diese Gewichtabnahme wird mit den in den Lagereinrichtungen 12 integrierten Wägezellen erfasst. In festgelegten Zeitintervallen wird die über den wiegetechnisch gelagerten Schüttgutbehälter erfasste Gewichtsabnahme mit einem Wert verglichen, der sich aus der im gleichen Zeitraum mit der Dosierwaage ermittelten geförderten Schüttgutmasse ergibt. Die geförderte Schüttgutmasse berechnet sich im Wesentlichen aus dem Produkt der erfassten Gewichts und der Fördergeschwindigkeit des Fördermittels 20 bzw. aus dem Zeitintergral über den erfassten Massenfluss.

Weicht die mit dem Fördermittel 20 gemessene geförderte Schüttgutmasse von der Gewichtsdifferenz ab, die mit der Kontrollmessung über den auf Wägezellen gelagerten Schüttgutbehälters 10 ermittelt wurde, so werden die mit dem Fördermittel 20 erfassten Messergebnisse mit einem Korrekturfaktor entsprechend angepasst bzw. korrigiert. Die Zeitintervalle einer solchen Kalibrierung und die quantitative Übernahme der Korrekturwerte können automatisiert zum Beispiel durch eine jeweilige Steuer- und Regelungseinrichtung erfolgen.

Die Gelenke 26, über die das Fördermittel 20 im Aufnahmebereich an dem Zuteiler 10, 11 angehängt ist, besitzen zweckmäßig jeweils wenigstens eine Messvorrichtung in Form einer Kraftmessdose oder Wägezelle, mit der die durch die Agitation des Schüttgutes hervorgerufenen impulsförmig oder ruckartig schwankenden vertikalen Kräfte erfasst werden können. Diese mit den Messvorrichtungen erfassten Signale können analysiert werden und geben einen Rückschluss auf das Fließverhalten des im Zuteiler 10, 11 fließenden Schüttgutes. Aus den erfassten Signalen kann ein Steuersignal generiert werden, mit dem das Rührwerk bzw. der im Schüttgutbehälter 10 bzw. in Austragsteil 11 stattfindende Agitationsprozess geregelt bzw. gesteuert werden kann. Durch diese Steuerung bzw. Regelung kann ein gleichmäßiger Massenfluss für eine gleichmäßige Beladung des Fördermittels 20 erreicht werden.

## Patentansprüche

1. Dosiervorrichtung für Schüttgut mit einem an einer Auslassöffnung eines Schüttgutbehälters (10, 11) angeordneten sich im Wesentlichen horizontal erstreckenden motorisch angetriebenen Fördermittel (20), wobei
das Fördermittel (20) dazu ausgebildet ist, das Schüttgut von einem Eintrittsbereich (24) zu einem Austrittsbereich (25) zu fördern, und wobei der Eintrittsbereich (24) unter dem Schüttgutbehälter (10) angeordnet ist und der Austrittsbereich (25) auf wenigstens einer ersten Messvorrichtung (27) abgestützt ist, die derart angeordnet und ausgebildet ist, die Gewichtsbelastung des Fördermittels (20) durch das Schüttgut zu ermitteln,
**dadurch gekennzeichnet, dass**
das Fördermittel (20) am Eintrittsbereich (24) frei schwebend an dem Schüttgutbehälter (10, 11) angehängt ist, wobei das Fördermittel (20) und der Schüttgutbehälter (10, 11) derart eingerichtet sind, dass diese voneinander getrennte Bewegungen vollziehen können und somit voneinander entkoppelt sind.

2. Dosiervorrichtung nach vorstehendem Anspruch, **dadurch gekennzeichnet, dass** das Fördermittel (20) als Schneckenförderer, ein Bandförderer, ein Kettenförderer oder ein Plattenbandförderer ist.

3. Dosiervorrichtung nach einem der vorstehenden Ansprüche, **dadurch gekennzeichnet, dass** elektronische Mittel vorgesehen sind, die ausgebildet sind, in Abhängigkeit der erfassten Gewichtsbelastung des Fördermittels (20) und der Geschwindigkeit des motorischen Antriebs des Fördermittels (20) den geförderten Massenstrom zu ermitteln.

4. Dosiervorrichtung vorstehendem Anspruch, **dadurch gekennzeichnet, dass** die elektronischen Mittel ausgebildet sind, die Fördergeschwindigkeit des Fördermittels (20) so zu steuern, dass der geförderte Massenstrom konstant bleibt.

5. Dosiervorrichtung nach vorstehenden Anspruch, **dadurch gekennzeichnet, dass** der Schüttgutbehälter (10) auf wenigstens einer zweiten Messvorrichtung (12) abgestützt ist, die derart angeordnet und ausgebildet ist, die Gesamtgewichtsbelastung des Behälters (10) und des Fördermittels (20) durch das Schüttgut zu ermitteln.

6. Dosiervorrichtung nach vorstehendem Anspruch, **dadurch gekennzeichnet, dass** die elektronischen Mittel ausgebildet sind, eine über die zweiten Messvorrichtungen (12) eine zeitliche Abnahme der Gesamtgewichtsbelastung zu erfassen und diese mit der durch das Fördermittel (20) geförderte Schüttgutmasse zu vergleichen, und gegebenenfalls einen Korrekturfaktor zum Ermitteln geförderte Massenstroms bereitzustellen.

7. Dosiervorrichtung nach einem der vorstehenden Ansprüche, **dadurch gekennzeichnet, dass** der
Schüttgutbehälter (10) ein Rührwerk umfasst, das ausgebildet ist, das Schüttgut zu agitieren.

8. Dosiervorrichtung vorstehendem Anspruch, **dadurch gekennzeichnet, dass** Fördermittel (20) am Eintrittsbereich (24) über wenigstens eine dritte Messvorrichtung (26) frei schwebend an dem Schüttgutbehälter (10) angehängt ist, die derart angeordnet und dazu ausgebildet ist, die vertikal wirkende Kräfte zwischen dem Schüttgutbehälter und dem Fördermittel zu erfassen.

9. Dosiervorrichtung vorstehendem Anspruch, **dadurch gekennzeichnet, dass** elektronische Mittel vorgesehen sind, die ausgebildet sind, das Rührwerk in dem Schüttgutbehälter in Abhängigkeit erfassten vertikal wirkenden Kräfte so zu steuern, dass sich in dem Schüttgutbehälter ein homogenes Fließverhalten einstellt.

10. Verfahren zum Betreiben einer Dosiervorrichtung für Schüttgut nach einem der vorstehenden Ansprüche, umfassend folgende Schritte:
a) Messen der Gewichtsbelastung des Fördermittels (20) über wenigstens eine erste Messvorrichtung (27) ;
b) Ermitteln des Massenstromes des im Fördermittel (20) geförderten Schüttgutes aus der Fördergeschwindigkeit und aus der Gewichtsbelastung des Fördermittels (20) sowie aus einem Korrekturfaktor;
c) Vergleichen des ermittelten Massenstromes mit einem vorgegebenen Sollwert für den Massenstrom;
d) Anpassen der Fördergeschwindigkeit des Fördermittels in Abhängigkeit des Vergleichs zwischen der ermittelten Massenstromes mit dem vorgegebenen Sollwertes des Massenstromes.

11. Verfahren nach vorstehendem Anspruch, wobei während des Betreibens der Dosiervorrichtung eine sich zyklisch wiederholende Kontrollmessung durchgeführt wird, umfassend folgende Schritte:
i) Messen der Gesamtgewichtsbelastung des Schüttgutbehälters (10) und des Fördermittels (20) über wenigstens eine zweite Messvorrichtung (12) ;
ii) Ermitteln der Abnahme der Gesamtgewichtsbelastung während eines definierten Zeitraumes;
iii) Ermitteln der während des definierten Zeitraumes mit dem Fördermittel (20) geförderten Schüttgutmasse;
iv) Ermitteln des Korrekturwertes aus dem Quotienten der ermittelten Abnahme der Gesamtgewichtsbelastung und der ermittelten vom Fördermittel (20) geförderten Schüttgutmasse;
v) Anpassen des Korrekturwertes für den Verfahrensschritt b).

12. Verfahren zum Bereitstellen einer Rührwerksregelung für den Betreib einer Dosiervorrichtung für Schüttgut nach einem der vorstehenden Ansprüche, umfassen folgende Schritte:
1) Messen von vertikalen Kräfte über wenigstens eine dritte Messvorrichtung (26), die zwischen dem Schüttgutbehälter (10) und dem Fördermittel (20) wirkt;
2) Ermitteln und Analysieren eines zeitlichen Signalverlaufs der gemessenen vertikalen Kräfte,
3) Anpassen einer Rührgeschwindigkeit des Rührwerks im Schüttgutbehälter, in Abhängigkeit des ermittelten und analysierten Signalverlaufs.

## Claims

1. Dosing device for bulk material with a motor-driven conveyor (20) that is located at an outlet opening of a bulk material container (10, 11) and extends essentially horizontally, wherein
the conveyor (20) is designed to convey the bulk material from an entry region (24) to an exit region (25), and wherein the entry region (24) is located beneath the bulk material container (10) and the exit region (25) is supported on at least one first measuring device (27), which is arranged and designed so as to ascertain the weight loading of the conveyor (20) by the bulk material, **characterized in that**
the conveyor (20) is attached to the bulk material container (10, 11) in a free-floating manner at the entry region (24), wherein the conveyor (20) and the bulk material container (10, 11) are equipped such that they can perform motions separately from one another, and thus are decoupled from one another.

2. Dosing device according to the preceding claim, **characterized in that** the conveyor (20) is as [sic; probably should read "is implemented as"] a screw conveyor, a conveyor belt, a chain conveyor, or a slat conveyor.

3. Dosing device according to one of the preceding claims, **characterized in that** electronic means are provided that are designed to ascertain, as a function of the sensed weight loading of the conveyor (20) and the speed of the motor drive of the conveyor (20), the mass flow that is conveyed.

4. Dosing device the preceding claim [sic; should read "according to the preceding claim"], **characterized in that** the electronic means are designed to control the conveying speed of the conveyor (20) such that the conveyed mass flow remains constant.

5. Dosing device according to the preceding claim, **characterized in that** the bulk material container (10) is supported on at least one second measuring device (12) that is arranged and designed so as to ascertain the total weight loading of the container (10) and of the conveyor (20) caused by the bulk material.

6. Dosing device according to the preceding claim, **characterized in that** the electronic means are designed to sense a decrease in the total weight loading over time by means of the second measuring devices (12), and to compare it with the bulk material mass conveyed by the conveyor (20), and if applicable to provide a correction factor for ascertaining the conveyed mass flow.

7. Dosing device according to one of the preceding claims, **characterized in that** the bulk material container (10) includes an agitator that is designed to agitate the bulk material.

8. Dosing device the preceding claim [sic; should read "according to the preceding claim"], **characterized in that** the conveyor (20) is attached to the bulk material container (10) in a free-floating manner at the entry region (24) by means of at least one third measuring device (26) that is arranged and designed so as to sense the vertically acting forces between the bulk material container and the conveyor.

9. Dosing device the preceding claim [sic; should read "according to the preceding claim"], **characterized in that** electronic means are provided that are designed to control the agitator in the bulk material container as a function of the measured vertically acting forces such that a homogeneous flow behavior is established in the bulk material container,

10. Method for operating a dosing device for bulk material according to one of the preceding claims, comprising the following steps:
a) measuring the weight loading of the conveyor (20) by means of at least one first measuring device (27);
b) ascertaining the mass flow of the bulk material conveyed in the conveyor (20) from the conveyor speed and from the weight loading of the conveyor (20) and from a correction factor;
c) comparing the ascertained mass flow with a predetermined nominal value for the mass flow;
d) adjusting the conveyor speed of the conveyor as a function of the comparison between the ascertained mass flow and the predetermined nominal value for the mass flow.

11. Method according to the preceding claim, wherein a cyclically repeating control measurement is performed during operation of the dosing device, comprising the following steps:
i) measuring the total weight loading of the bulk material container (10) and of the conveyor (20) by means of at least one second measuring device (12);
ii) ascertaining the decrease in total weight loading during a defined time period;
iii) ascertaining the bulk material mass conveyed by the conveyor (20) during the defined time period;
iv) ascertaining the correction value from the quotient of the ascertained decrease in total weight loading and the ascertained bulk material mass conveyed by the conveyor (20);
v) adjusting the correction value for step b).

12. Method for providing an agitator regulation for operating a dosing device for bulk material according to one of the preceding claims, comprising the following steps:
1) measuring the vertical forces by means of at least one third measuring device (26) acting between the bulk material container (10) and the conveyor (20);
2) ascertaining and analyzing a signal behavior over time of the measured vertical forces;
3) adjusting an agitator speed of the agitator in the bulk material container as a function of the ascertained and analyzed signal behavior.

## Revendications

1. Dispositif de dosage pour un produit en vrac avec un moyen de convoyage (20) motorisé s'étendant globalement horizontalement, disposé au niveau d'une ouverture de sortie d'un réservoir de produit en vrac (10, 11),
le moyen de convoyage (20) étant conçu pour convoyer le produit en vrac d'une zone d'entrée (24) vers une zone de sortie (25), et la zone d'entrée (24) étant disposée sous le réservoir de produit en vrac (10) et la zone de sortie (25) étant appuyée contre au moins un premier dispositif de mesure (27), qui est disposé et conçu de façon à déterminer la charge de poids du moyen de convoyage (20) due au produit en vrac,
**caractérisé en ce que**
le moyen de convoyage (20) est suspendu au réservoir de produit en vrac (10, 11) au niveau de la zone d'entrée (24) de façon à flotter librement, le moyen de convoyage (20) et le réservoir de produit en vrac (10, 11) étant conçus de façon à ce que ceux-ci puissent effectuer des mouvements distincts et soient donc découplés entre eux.

2. Dispositif de dosage selon la revendication précédente, **caractérisé en ce que** le moyen de convoyage (20) se présente sous la forme d'un convoyeur à vis sans fin, d'un convoyeur à bandes, d'un convoyeur à chaînes ou d'un convoyeur à palettes.

3. Dispositif de dosage selon l'une des revendications précédentes, **caractérisé en ce que** des moyens électroniques sont prévus, qui sont conçus pour déterminer le débit massique convoyé en fonction de la charge de poids mesurée du moyen de convoyage (20) et de la vitesse de l'entraînement motorisé du moyen de convoyage (20).

4. Dispositif de dosage selon la revendication précédente, **caractérisé en ce que** les moyens électroniques sont conçus pour contrôler la vitesse de convoyage du moyen de convoyage (20) de façon à ce que le débit massique convoyé reste constant.

5. Dispositif de dosage selon la revendication précédente, **caractérisé en ce que** le réservoir de produit en vrac (10) est appuyé contre au moins un deuxième dispositif de mesure (12) qui est disposé et conçu de façon à déterminer la charge de poids du réservoir (10) et du moyen de convoyage (20) due au produit en vrac.

6. Dispositif de dosage selon la revendication précédente, **caractérisé en ce que** les moyens électroniques sont conçus pour mesurer, par l'intermédiaire des deuxièmes dispositifs de mesure (12), une diminution dans le temps de la charge de poids et comparer celle-ci avec la masse de produit en vrac convoyée par le moyen de convoyage (20) et, le cas échéant, en déduire un facteur de correction pour la détermination du débit massique convoyé.

7. Dispositif de dosage selon l'une des revendications précédentes, **caractérisé en ce que** le réservoir de produit en vrac (10) comprend un dispositif d'agitation qui est conçu pour agiter le produit en vrac.

8. Dispositif de dosage selon la revendication précédente, **caractérisé en ce que** le moyen de convoyage (20) est suspendu, de façon à flotter librement, au réservoir de produit en vrac (10), au niveau de la zone d'entrée (24) par l'intermédiaire d'au moins un troisième dispositif de mesure (26), qui est disposé et conçu pour mesurer les forces appliquées verticalement entre le réservoir de produit en vrac et le moyen de convoyage.

9. Dispositif de dosage selon la revendication précédente, **caractérisé en ce que** des moyens électroniques sont prévus, qui sont conçus pour contrôler le dispositif d'agitation dans le réservoir de produit en vrac en fonction des forces appliquées verticalement de façon à ce qu'un comportement de fluidité homogène apparaisse dans le réservoir de produit en vrac.

10. Procédé d'exploitation d'un dispositif de dosage pour un produit en vrac selon l'une des revendications précédentes, comprenant les étapes suivantes :
a) mesure de la charge de poids du moyen de convoyage (20) par l'intermédiaire d'au moins un premier dispositif de mesure (27) ;
b) détermination du débit massique du produit en vrac convoyé dans le moyen de convoyage (20) à partir de la vitesse de convoyage du moyen de convoyage (20) ainsi qu'à partir d'un facteur de correction ;
c) comparaison du débit massique déterminé avec une valeur de consigne prédéterminée pour le débit massique ;
d) adaptation de la vitesse de convoyage du moyen de convoyage en fonction de la comparaison entre le débit massique déterminé et la valeur de consigne prédéterminée du débit massique.

11. Procédé selon la revendication précédente, moyennant quoi, pendant l'exploitation du dispositif de dosage, une mesure de contrôle cyclique est effectuée, comprenant les étapes suivantes :
i) mesure de la charge de poids totale du réservoir de produit en vrac (10) et du moyen de convoyage (20) par l'intermédiaire de l'au moins un deuxième dispositif de mesure (12) ;
ii) détermination de la diminution de la charge de poids totale pendant une période définie ;
iii) détermination de la masse de produit en vrac convoyée pendant la période définie avec le moyen de convoyage (20) ;
iv) détermination de la valeur de correction à partir du quotient entre la diminution déterminée de la charge de poids totale et la masse de produit en vrac convoyée par le moyen de convoyage (20) ;
v) adaptation de la valeur de correction pour l'étape b).

12. Procédé de réalisation d'une régulation de dispositif d'agitation pour l'exploitation d'un dispositif de dosage pour un produit en vrac selon l'une des revendications précédentes, comprenant les étapes suivantes :
1) mesure des forces verticales par l'intermédiaire d'au moins un troisième dispositif de mesure (26), qui agit entre le réservoir de produit en vrac (10) et le moyen de convoyage (20) ;
2) détermination et analyse d'un tracé de signal des forces verticales mesurées en fonction du temps,
3) adaptation de la vitesse du dispositif d'agitation dans le réservoir de produit en vrac en fonction du tracé de signal déterminé et analysé.
